# EUROPÄISCHE PATENTSCHRIFT

(11) **EP 1 323 757 B1**
(45) Veröffentlichungstag und Bekanntmachung des Hinweises auf die Patenterteilung: **12.04.2006**
(21) Anmeldenummer: 02024720.1
(22) Anmeldetag: 06.11.2002
(51) Int. Cl.: C08G 18/42, C09D 175/16, C09D 5/03

(54) **Pulverlackzusammensetzungen aus kristallinen Urethanacrylaten und deren Verwendung**
Powder coating compositions based on crystalline urethane acrylates and their use
Compositons de revêtement en poudre à partir d'uréthaneacrylate et leur utilisation

(30) Priorität: 22.12.2001 DE 10163825
(43) Veröffentlichungstag der Anmeldung: 02.07.2003
(73) Patentinhaber: Degussa AG, 40474 Düsseldorf (DE)
(72) Erfinder: Wenning, Andreas, Dr., 48301 Nottuln (DE); Spyrou, Emmanouil, Dr., 45772 Marl (DE); Franzmann, Giselher, Dr., 58453 Witten (DE)

(56) Entgegenhaltungen:
- WO-A-02/50147
- WO-A-99/14254
- US-A- 4 552 932
- US-A- 5 639 560
- US-A1- 2002 099 127

## Beschreibung

Die Erfindung betrifft Strahlen härtbare Pulverlackzusammensetzungen auf Basis kristalliner Urethanacrylate, die zu licht- und wetterstabilen Lackfilmen vernetzen.

Thermisch vernetzbare Pulverlacke sind bekannt und werden in der lackverarbeitenden Industrie häufig verwendet.

So beschreibt z. B. die DE-PS 27 35 497 PUR-Pulverlacke mit hervorragender Witterungs- und Wärmestabilität. Die Vernetzer, deren Herstellung in der DE-PS 27 12 931 beschrieben wird, bestehen aus ε-Caprolactam blockiertem Isocyanuratgruppen enthaltendem Isophorondiisocyanat. Es sind auch urethan-, biuret- oder harnstoffgruppenhaltige Polyisocyanate bekannt, deren Isocyanatgruppen ebenfalls blockiert sind.

Der Nachteil dieser Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und/oder Wiedergewinnung des Blockierungsmittels getroffen werden. Zudem weisen die Vernetzer eine geringe Reaktivität auf. Es sind Härtungstemperaturen oberhalb von 170 °C erforderlich.

Beide Nachteile, Emission von Blockierungsmittel und Aushärtung bei hohen Temperaturen, können ausgeräumt werden durch Pulverlacke, die nicht thermisch, sondern durch Strahlung ausgehärtet werden. Derartige Strahlen härtbare Pulverlacke sind bekannt und z. B. in USP 3,485,732, EP 0 407 826, EP 0636669, WO99/14254, USP 3,974,303, USP 5,639,560 und EP 0934359 beschrieben.

Die EP 0636669 und die WO 99/14254 beschreiben zweikomponentige, Strahlen härtbare Pulverlacke auf Basis eines ungesättigten Polyesters und eines Vinylethers. Die daraus hergestellten Beschichtungen sind nicht für den Außeneinsatz geeignet, da sie stark vergilben.

Das US-Patent 3,974,303 beschreibt thermoplastische Harze, die pro 1000 g des Molekulargewichtes 0,5 bis 3,5 polymerisierbare ungesättigte Gruppen enthalten. Die beschriebenen Polyurethane (s. Beispiel 1) sind jedoch nicht wetterstabil und besitzen aufgrund fehlender Polyestergruppen und geringer Kettenlänge eine geringe Flexibilität.

Die EP 0934359 beschreibt pulverförmige Strahlen härtbare Mischungen aus amorphen und kristallinen Polyestern mit terminalen Methacrylatgruppen. Diese daraus hergestellten Pulverlackbeschichtungen besitzen nur befriedigende Haftung und Flexibilität.

Das US-Patent 5,639,560 beschreibt Strahlen härtbare Pulverzusanunensetzungen mit speziellen kristallinen Polyestern, die terminal Methacrylatgruppen aufweisen, als Bindemittel. Die Bindemittel werden durch Umsetzung kristalliner Polyester mit Glycidylmethacrylat hergestellt. Die aus diesen Pulverlackzusammensetzungen hergestellten Beschichtungen sind sehr flexibel.

Aufgabe der vorliegenden Erfindung war es, Strahlen härtbare Pulverlackzusammensetzungen zu finden, die lagerstabil sind und außerdem nach der Aushärtung der Lackfilme zu gleichzeitig hochflexiblen und außenwetterstabilen Beschichtungen mit hoher Haftung und sehr gutem Verlauf führen.

Überraschend konnte diese Aufgabe durch eine Strahlen härtbare Pulverlackzusammensetzung gelöst werden, die als Bindemittel mindestens ein kristallines Urethanacrylat mit einem Schmelzpunkt von 40 - 130 °C enthält.

Gegenstand der Erfindung sind Strahlen härtbare Pulverlackzusammensetzungen enthaltend
I. ein Bindemittel bestehend aus mindestens einem kristallinen Urethanacrylat mit einem Schmelzpunkt von 40 bis 130 °C;
   und
II. Hilfs- und Zusatzstoffe.

Ebenfalls Gegenstand der Erfindung ist die Verwendung von Zusammensetzungen enthaltend
I. ein Bindemittel bestehend aus
   mindestens einem kristallinen Urethanacrylat mit einem Schmelzpunkt von 40 bis 130 °C; und
II. Hilfs- und Zusatzstoffe, zur Herstellung von Strahlen härtbaren Pulverlackzusammensetzungen.

Weiterer Gegenstand der Erfindung ist ein Verfahren zur Herstellung von Strahlen härtbaren Pulverlackzusammensetzungen
enthaltend
I. ein Bindemittel bestehend aus
   mindestens einem kristallinen Urethanacrylat mit einem Schmelzpunkt von 40 bis 130 °C;
   und
II. Hilfs- und Zusatzstoffe,
   bei Einhaltung einer Temperaturobergrenze zwischen 120 °C und 130 °C, in beheizbaren Knetern, insbesondere Extrudern.

Gegenstand der Erfindung ist auch ein Verfahren zur Herstellung von Beschichtungen durch Verwendung von Strahlen härtbaren Pulverlackzusammensetzungen enthaltend
I. ein Bindemittel bestehend aus
   mindestens einem kristallinen Urethanacrylat mit einem Schmelzpunkt von 40 bis 130 °C;
   und
II. Hilfs- und Zusatzstoffe.

Urethanacrylate im Sinne dieser Erfindung bestehen aus einem Hydroxylgruppen haltigen Polyester, an den durch Umsetzung mit Polyisocyanaten und acrylathaltigen Alkoholen Urethangruppen und Acrylatgruppen angebunden werden.

Die erfindungsgemäßen kristallinen Urethanacrylate werden aus kristallinen Hydroxylgruppen haltigen Polyestern (I.1) mit einem Schmelzpunkt von 40 - 130 °C durch Umsetzung mit Polyisocyanaten (I.2) und einer Verbindung, die gleichzeitig mindestens eine Alkoholgruppe und mindestens eine polymerisationsfähige Acrylatgruppe (I.3) enthält, hergestellt. Sie weisen ebenso Urethangruppen wie endständige Acrylatgruppen auf.

Die kristallinen Hydroxylgruppen haltigen Polyester I.1 mit einem Schmelzpunkt von 40 - 130°C werden hergestellt durch Polykondensation von geeigneten Dicarbonsäuren und Diolen. Die Kondensation erfolgt auf an sich bekannte Weise in einer Inertgas-Atmosphäre bei Temperaturen von 100 bis 260 °C, vorzugsweise 130 bis 220 °C, in der Schmelze oder in azeotroper Fahrweise, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist. Die für die Herstellung von Polyestern bevorzugte Carbonsäuren können aliphatischer, cycloaliphatischer und/oder aromatischer Natur sein Als Beispiele hierfür seien genannt: Bernsteinsäure, Adipinsäure, Korksäure, Azelainsäure, Sebacinsäure, Dodecandisäure, 1,4-Cyclohexan-dicarbonsäure, Phthalsäure, Terephthalsäure, Isophthalsäure, Trimellitsäure, Pyromellitsäure, Tetrahydrophthalsäure, Hexahydrophthalsäure, Hexahydroterephthalsäure, Endomethylen-tetrahydrophthalsäure, Glutarsäure bzw. - soweit zugänglich - deren Anhydride oder Ester. Besonders gut geeignet sind Dodecandisäure, Adipinsäure, Bernsteinsäure, Sebacinsäure, Isophthalsäure, Terephthalsäure, Hexahydroterephthalsäure und 1,4-Cyclohexandicarbonsäure.

Als Polyole kommen z. B. Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), 1,4-Bis(hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 2-Methyl-pentandiol-1,5, 2,2,4(2,4,4)-Trimethylhexandiol-1,6, Glycerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester, infrage. Bevorzugt sind Monoethylenglykol, Butandiol, Hexandiol, Neopentylglykol, Cyclohexandimethanol, Trimethylolpropan und Glycerin.

So hergestellte kristalline Hydroxylgruppen haltige Polyester haben eine OH-Zahl von 15 - 150 mg KOH/g, eine Säurezahl von <5 mg KOH/g und einen Schmelzpunkt von 40 - 130 °C. Es können auch Gemische von kristallinen Polyestern eingesetzt werden.

In den erfindungsgemäßen kristallinen Urethanacrylaten werden als Polyisocyanate 1.2 Diisocyanate aliphatischer, (cyclo)aliphatischer oder cycloaliphatischen Struktur eingesetzt. Repräsentative Beispiele der Polyisocyanate sind 2-Methylpentamethylen-1,5-düsocyanat, Hexamethylendiisocyanat, Trimethylhexamethylen-1,6-düsocyanat, insbesondere das 2,2,4- und das 2,4,4-Isomere und technische Gemische beider Isomere, 4,4'-Methylen-bis(cyclohexylisocyanat), Norbomandiisocyanat, und 3,3,5-Trimethyl-1-isocyanato-3-isocyanatomethylcyclohexan (IPDI). Ebenfalls gut geeignet sind auch Polyisocyanate, die durch Umsetzung von Polyisocyanaten mit sich selbst über Isocyanatgruppen erhältlich sind, wie Isocyanurate, die durch Reaktion dreier Isocyanatgruppen entstehen. Die Polyisocyanate können ebenfalls Biuret- oder Allophanatgruppen enthalten. Besonders gut geeignet ist IPDI.

Als polymerisationsfähige Verbindungen I.3 mit mindestens einer freien OH-Gruppe und einer polymerisationsfähigen Acrylatgruppe kommen z. B. Hydroxyethylacrylat (HEA), Hydroxypropylacrylat und Glycerindiacrylat in Frage. Besonders gut geeignet ist Hydroxyethylacrylat (HEA).

Zur Herstellung des kristallinen Urethanacrylats aus den kristallinen OH-haltigen Polyestern I.1, Polyisocyanaten I.2 und Verbindungen I.3 wird zunächst das Polyisocyanat vorgelegt, mit DBTL als Katalysator und IONOL CP (Shell) als Polymerisationsinhibitor versetzt und in einem Verhältnis NCO:OH von 2,5 - 1,5:1 der Polyester zugegeben. Nach beendeter Zugabe wird die Reaktion bei 70 - 130 °C vervollständigt. Danach wird zum Reaktionsprodukt die Komponente I.3, z.B. Hydroxyethylacrylat im Verhältnis Rest-NCO : OH von 1,0 - 1,1 : 1 gegeben und die Reaktion bei 70 - 130 °C vervollständigt, so dass ein NCO-Gehalt unter 0,1 % erreicht wird. Auch möglich ist eine Vorreaktion eines Polyisocyanats, z. B. IPDI, mit der Komponente I.3 und die Zugabe dieses NCO-haltigen Vorproduktes zum Hydroxylgruppen haltigen kristallinen Polyester.

Zur Strahlenhärtung der erfindungsgemäßen Pulverlackzusammensetzung sind beschleunigte Elektronenstrahlen geeignet. Die Elektronenstrahlung generiert aus der Pulverlackzusammensetzung freie Radikale in einer Anzahl, die eine extrem schnelle Polymerisation der reaktiven Acrylatgruppen gewährleistet. Bevorzugt werden Strahlungsdosen von 5 bis 15 Mrad verwendet.

Im Falle der UV-Härtung werden als weitere erforderliche Einsatzstoffe UV-Initatoren verwendet, die prinzipiell bekannt sind aus herkömmlichen flüssigen UV-härtenden Systemen, z. B. EP 633912. Dies sind Stoffe, die bei Bestrahlung mit UV-Licht in Radikale zerfallen und damit die Polymerisation starten. Als UV-Initiatoren kommen in Frage z.B. 2,2'-Diethoxyacetophenon, Hydroxycyclohexylphenylketon, Benzophenon, 2-Hydroxy-2-methyl-1-phenylpropan-1-on, Xanthon, Thioxanthon, Benzildimethylketal, usw. Solche UV-Initiatoren werden kommerziell angeboten, z. B. IRGACURE 184 oder DEGACURE 1173 von Ciba. Der Anteil des Photoinitiators am Gesamtsystem beträgt etwa 0,5 bis 5 Gew.-%.

Der Einsatz von Initiatoren, z. B. Thioxanthone, Phosphinoxide, Metallocene, tertiäre Aminobenzole oder tertiäre Aminobenzophenone, die bei Bestrahlung mit sichtbarem Licht in Radikale zerfallen, ist ebenso möglich.

Optionale Zusatzstoffe sind acrylat- oder methacrylathaltige Verbindungen, wie z. B. das Triacrylat von Tris(2-hydroxyethyl)isocyanurat (SR 386, Sartomer), und Haftvermittler, die in untergeordneten Anteilen von 0 - 20 Gew.-% eingesetzt werden können, um die Beschichtungseigenschaften zu modifizieren.

Weitere bei Pulverlacken übliche Zusatzstoffe sind Verlaufmittel, Lichtstabilisatoren, und Entgasungsmittel. Diese können in 0 - 5 Gew.-% verwendet werden. Außerdem möglich ist der Einsatz von Pigmenten und Füllern, z. B. Metalloxide wie Titandioxid, und Metallhydroxide, Sulfate, Sulfide, Carbonate, Silicate, Talkum, Ruß usw. in Gewichtsanteilen von 0 - 40 %.

Zur Herstellung der gebrauchsfertigen Pulverlackzusammensetzung werden die Einsatzstoffe vermischt. Die Homogenisierung der Einsatzstoffe kann in geeigneten Aggregaten, wie z. B. beheizbaren Knetern, vorzugsweise jedoch durch Extrudieren, erfolgen, wobei Temperaturobergrenzen von 120 - 130 °C nicht überschritten werden sollten. Die extrudierte Masse wird nach Abkühlen auf Raumtemperatur und nach geeigneter Zerkleinerung zum sprühfertigen Pulver ohne Zusatz von Kühlmitteln vermahlen. Das Auftragen des sprühfertigen Pulvers auf geeignete Substrate kann nach den bekannten Verfahren, wie z. B. durch elektro- oder tribostatisches Pulversprühen, Wirbelsintern oder elektrostatisches Wirbelsintern erfolgen. Geeignete Substrate sind z. B. unbehandelte oder vorbehandelte metallische Substrate, Holz, Holzwerkstoffe, Kunststoffe, Glas oder Papier.

Die aus den erfindungsgemäßen Pulverlackzusammensetzungen hergestellten Beschichtungen sind wetterstabil, hochflexibel und besitzen eine gute Haftung und einen exzellenten Verlauf. Sie können von hochglänzend bis matt eingestellt werden.

Die Erfindung wird durch die folgenden Beispiele näher erläutert:

### Beispiele:

### 1. Herstellvorschrift des kristallinen Hydroxylgruppen haltigen Polyesters

Säurekomponenten und Alkoholkomponenten werden mit 0,2 Massenprozente n-Butylzinntrisoctonoat versetzt und in einer mit einer Destillationskolonne versehenen Apparatur unter Stickstoff und Rühren auf 190 °C erhitzt. Diese Temperatur wird im Laufe der Wasserabscheidung langsam auf 230 °C erhöht. Nachdem etwa 98 % der theoretischen Wassermenge abdestilliert worden sind, wird das Produkt abgekühlt und auf OH-Zahl (OHZ in mg KOH/g) und Säure-Zahl (SZ in mg KOH/g) geprüft.

Auf diese Weise wurden folgende Polyester hergestellt:
A1: Kristalliner Polyester aus DDS 100 %, MEG 100 %, OHZ 35 mg KOH/g, Schmelzpunkt 81 °C
A2: Kristalliner Polyester aus BSA 100 %, BD 100 %, OHZ 31 mg KOH/g, Schmelzpunkt 113 °C
A3: Kristalliner Polyester aus DMT 60 %, ADS 40 %, HD 100 %, OHZ 31 mg KOH/g, Schmelzpunkt 96 °C

BSA: Bernsteinsäureanhydrid, DDS: Dodecandisäure, DMT: Dimethylterephthalat,
MEG: Monoethylenglykol, BD: Butandiol-1,4, HD: Hexandiol-1,6

### 2. Herstellung des kristallinen Urethanacrylates A1U

Unter kräftigem Rühren wird zu 772,0 g des aufgeschmolzenen Polyesters A1 (OHZ 35) bei 110 °C portionsweise eine Mischung aus 215,9 g eines 1:1-Adduktes aus IPDI und Hydroxyethylacrylat, 2,0 g IONOL CP und 0,1 g DBTL gegeben. Nach etwa einer Stunde Rühren liegt der NCO-Gehalt unter 0,1 % und die heiße Reaktionsmischung wird aus dem Kolben auf eine Folie gegossen. Sobald die Reaktionsmasse erstarrt und abgekühlt ist, wird sie mechanisch zerkleinert und gemahlen. Der Schmelzpunkt dieses Produktes beträgt 79 °C.

### 3. Herstellung des kristallinen Urethanacrylates A2U

103,8 g des Polyesters A2 (OHZ 31) werden aufgeschmolzen und bei 120 °C portionsweise unter kräftigem Rühren zu einer Mischung aus 16,1 g IPDI, 0,1 g IONOL CP und 0,1 g DBTL gegeben. Nach 30 min Reaktion werden zusätzlich 10,1 g Hydroxyethylacrylat zugetropft. Nach weiteren 30 min Rühren liegt der NCO-Gehalt unter 0,1 % und die heiße Reaktionsmischung wird aus dem Kolben auf eine Folie gegossen. Sobald die Reaktionsmasse erstarrt und abgekühlt ist, wird sie mechanisch zerkleinert und gemahlen. Der Schmelzpunkt dieses Produktes beträgt 109 °C.

### 4. Herstellung des kristallinen Urethanacrylates A3U

Unter kräftigem Rühren wird zu 155,7 g des aufgeschmolzenen Polyesters A3 (OHZ 31) bei 120 °C portionsweise eine Mischung aus 24,2 g IPDI, 0,15 g IONOL CP und 0,15 g DBTL gegeben. Nach 30 min Reaktion werden zusätzlich 15,2 g Hydroxyethylacrylat zugetropft. Nach weiteren 45 min Rühren liegt der NCO-Gehalt unter 0,1% und die heiße Reaktionsmischung wird aus dem Kolben auf eine Folie gegossen. Sobald die Reaktionsmasse erstarrt und abgekühlt ist, wird sie mechanisch zerkleinert und gemahlen. Der Schmelzpunkt dieses Produktes beträgt 92°C.

### 5. Allgemeine Herstellung der erfindungsgemäßen Polymere und Pulverlackzusammensetzungen der Beispiele 1 bis 3 und des Vergleichsversuchs A

100 Teile des kristallinen Urethanacrylates (AIU, A2U oder A3U) werden mit 0,7 Teilen BYK 361 (Verlaufmittel, BYK Chemie), 1,0 Teilen Worlée Add 900 (Entgasungsmittel, Worlée-Chemie) und 1 Teil EBECRYL 170 (Haftvermittler, UCB) versetzt. Die zerkleinerten Einsatzstoffe werden in einem Kollergang innig vermischt und anschließend im Extruder bis maximal 130 °C homogenisiert. Nach dem Erkalten wird das Extrudat gebrochen und mit einer Stiftsmühle im Falle des Vergleichsversuchs mit und im Falle des erfindungsgemäßen Beispiels ohne Zusatz von Kühlmitteln (flüssiger Stickstoff oder Trockeneis) auf eine Korngröße < 100 µm gemahlen. Das so hergestellte Pulver wird mit einer elektrostatischen Pulverspritzanlage bei 60 kV auf entfettete, ggf. vorbehandelte Normalstahlbleche appliziert. Dann wird unter IR-Bestrahlung aufgeschmolzen und mit Hilfe von Elektronenstrahlen (15 MRad) ausgehärtet.

### 6. Vergleich A

Für das Vergleichsbeispiel wurde die folgende Rezeptur eingesetzt:
82,4 g Uracross P 3125 (DSM Resins)
16,9 g Uracross P 3307 (DSM Resins)
0,7 g Byk 361 (Byk-Chemie)

Die Prüfwerte sind in der Tabelle 1 zusammengefasst:

**Tabelle 1**

| *Versuch* | *Kristallines Urethanacrylat* | *Substrat* | *ET*^{*1*} *[mm]* | *KS indir.*^{*2*} *[inch·lb)* | *GS*^{*3*} | *ΔE*^{*4*} |
|---|---|---|---|---|---|---|
| 1 | 100 A1U | Normalstahl | > 10 | > 80 | 0 | 0,5 |
| 2 | 100 A2U | Normalstahl | > 10 | > 80 | 0 | 0,8 |
| 3 | 100 A3U | Normalstahl | > 10 | > 80 | 0 | 1,2 |
| A | Vergleich | Normalstahl | 6,0 | < 10 | 1 | 13,4 |

| | | | | | | |
|---|---|---|---|---|---|---|
| 1: Erichsentiefung (DIN 53 156) | | | | | | |
| 2: Indirekter Kugelschlag (ASTM D 2797-93) | | | | | | |
| 3: Gitterschnitt (DIN EN ISO 2409) (Skala 0 (kein Haftungsverlust) bis 5 (totaler Haftungsverlust)) | | | | | | |
| 4: Vergilbung nach 2000 h QUV-A-Kurzbewitterung (DIN 53384 und DIN ISO 4892-3) | | | | | | |

Lediglich die erfindungsgemäßen Versuche 1, 2 und 3 zeigen in der Beschichtung gleichzeitig eine exzellente Flexibilität, sehr gute Haftung und eine extrem hohe Vergilbungsresistenz in der Außenbewitterung. Das nicht erfindungsgemäße Vergleichsbeispiel weist in allen diesen Punkten Schwächen auf.

## Patentansprüche

1. Strahlen härtbare Pulverlackzusammensetzung enthaltend
I. ein Bindemittel bestehend aus
mindestens einem kristallinen Urethanacrylat mit einem Schmelzpunkt von 40 bis 130 °C;
und
II. Hilfs- und Zusatzstoffe.

2. Strahlen härtbare Pulverlackzusammensetzung nach Anspruch 1,
**dadurch gekennzeichnet,**
**dass** das kristalline Urethanacrylat durch Reaktion der folgenden Komponenten aufgebaut ist:
I.1) mindestens ein kristalliner Hydroxylgruppen haltiger Polyester mit einer Schmelzpunkt von 40 - 130 °C,
I.2) mindestens ein Polyisocyanat,
I.3) mindestens eine Verbindung mit mindestens einer Alkoholgruppe und mindestens einer polymerisationsfähigen Acrylatgruppe.

3. Strahlen härtbare Pulverlackzusammensetzung nach Anspruch 2,
**dadurch gekennzeichnet,**
**dass** der Polyester I.1 aufgebaut ist aus mindestens einer monomeren Dicarbonsäure, ausgewählt aus Dodecandisäure, Adipinsäure, Bernsteinsäure, Sebacinsäure, Isophthalsäure, Terephthalsäure, Hexahydroterephthalsäure und 1,4-Cyclohexandicarbonsäure
und
mindestens einem monomeren Polyol, ausgewählt aus Monoethylenglykol, Butandiol, Hexandiol, Neopentylglykol, Cyclohexandimethanol, Trimethylolpropan und Glycerin.

4. Strahlen härtbare Pulverlackzusammensetzung nach mindestens einem der Ansprüche 2 bis 3,
**dadurch gekennzeichnet,**
**dass** als Polyisocyanat I.2 Isophorondiisocyanat, Hexamethylendiisocyanat, Trimethylhexamethylendiisocyanat, Dicyclohexylmethyldiisocyanat oder 2,2,6-Trimethyl-1,4-diisocyanatocyclohexan, Norbornandiisocyanat allein oder in Mischungen oder Folgeprodukte dieser Diisocyanate, wie Isocyanurate, Allophanate oder Biurete, eingesetzt werden.

5. Strahlen härtbare Pulverlackzusammensetzung nach mindestens einem der Ansprüche 2 bis 4,
**dadurch gekennzeichnet,**
**dass** als Komponente I.3 Hydroxyethylacrylat eingesetzt wird.

6. Strahlen härtbare Pulverlackzusammensetzung nach mindestens einem der Ansprüche 1 bis 5,
**dadurch gekennzeichnet,**
**dass** als Hilfs- und Zusatzstoffe UV-Initiatoren, Verlaufinittel, Lichtstabilisatoren, Entgasungsmittel, Pigmente, Füllstoffe, Haftvermittler oder weitere acrylat- und/oder methacrylathaltige Verbindungen enthalten sind.

7. Verwendung von Zusammensetzungen enthaltend
I. ein Bindemittel bestehend aus
mindestens einem kristallinen Urethanacrylat mit einem Schmelzpunkt von 40 bis 130 °C;
und
II. Hilfs- und Zusatzstoffe,
zur Herstellung von Strahlen härtbaren Pulverlackzusammensetzungen.

8. Verwendung nach Anspruch 7,
**dadurch gekennzeichnet,**
**dass** das kristalline Urethanacrylat I. durch Reaktion der folgenden Komponenten aufgebaut ist:
I.1 mindestens ein kristalliner Hydroxylgruppen haltiger Polyester mit einem Schmelzpunkt von 40 - 130 °C.
I.2 mindestens ein Polyisocyanat,
I.3 mindestens eine Verbindung mit mindestens einer Alkoholgruppe und mindestens einer polymerisationsfähigen Acrylatgruppe.

9. Verwendung nach Anspruch 8,
**dadurch gekennzeichnet,**
**dass** der Polyester I.1 aufgebaut ist aus mindestens einer monomeren Dicarbonsäure, ausgewählt aus Dodecandisäure, Adipinsäure, Bernsteinsäure, Sebacinsäure, Isophthalsäure, Terephthalsäure, Hexahydroterephthalsäure und 1,4-Cyclohexandicarbonsäure
und
mindestens einem monomeren Polyol, ausgewählt aus Monoethylenglykol, Butandiol, Hexandiol, Neopentylglykol, Cyclohexandimethanol, Trimethylolpropan und Glycerin.

10. Verwendung nach mindestens einem der Ansprüche 8 bis 9,
**dadurch gekennzeichnet,**
**dass** als Polyisocyanat I.2 Isophorondiisocyanat, Hexamethylendiisocyanat, Trimethylhexamethylendiisocyanat, Dicyclohexylmethyldiisocyanat oder 2,2,6-Trimethyl-1,4-diisocyanatocyclohexan, Norbornandiisocyanat allein oder in Mischungen oder Folgeprodukte dieser Diisocyanate, wie Isocyanurate, Allophanate oder Biurete, eingesetzt werden.

11. Verwendung nach mindestens einem der Ansprüche 8 bis 10,
**dadurch gekennzeichnet,**
**dass** als Komponente I.3 Hydroxyethylacrylat eingesetzt wird.

12. Verwendung nach mindestens einem der Ansprüche 7 bis 11,
**dadurch gekennzeichnet,**
**dass** als Hilfs- und Zusatzstoffe, Verlaufmittel, Lichtstabilisatoren, Entgasungsmittel, Pigmente, Füllstoffe, Haftvermittler oder weitere acrylat- und/oder methacrylathaltige Verbindungen enthalten sind.

13. Verwendung der Strahlen härtbaren Pulverlackzusammensetzungen nach mindestens einem der Ansprüche 7 bis 12 zur Herstellung von Beschichtungen.

14. Verwendung der Strahlen härtbare Pulverlackzusammensetzungen nach mindestens einem der Ansprüche 7 bis 13 zur Herstellung von licht- und wetterstabilen, flexiblen, harten sowie gut haftenden Beschichtungen.

15. Verfahren zur Herstellung von Strahlen härtbaren Pulverlackzusammensetzungen
enthaltend
I. ein Bindemittel bestehend aus
mindestens einem kristallinen Urethanacrylat mit einem Schmelzpunkt von 40 bis 130 °C;
und
II. Hilfs- und Zusatzstoffe,
bei Einhaltung einer Temperaturobergrenze zwischen 120 °C und 130 °C, in beheizbaren Knetern, insbesondere Extrudern.

16. Verfahren nach Anspruch 15,
**dadurch gekennzeichnet,**
**dass** als Einsatzstoffe Verbindungen nach mindestens einem der Ansprüche 2 bis 6 eingesetzt werden.

17. Verfahren zur Herstellung von Beschichtungen durch Verwendung von Strahlen härtbaren Pulverlackzusammensetzungen
enthaltend
I. ein Bindemittel bestehend aus
mindestens einem kristallinen Urethanacrylat mit einem Schmelzpunkt von 40 bis 130 °C;
und
II. Hilfs- und Zusatzstoffe.

18. Verfahren nach Anspruch 17,
**dadurch gekennzeichnet,**
**dass** als Ausgangskomponenten die Verbindungen nach mindestens einem der Ansprüche 2 bis 6 verwendet werden.

19. Verwendung der Pulverlackzusammensetzungen nach Anspruch 14 zur Herstellung von glänzenden Beschichtungen.

20. Verwendung der Pulverlackzusammensetzungen nach Anspruch 14 zur Herstellung von matten Beschichtungen.

## Claims

1. A radiation-curable powder coating composition comprising
I. a binder composed of at least one crystalline urethane acrylate with a melting point of from 40 to 130°C
and
II. auxiliaries and additives.

2. A radiation-curable powder coating composition according to claim 1, **characterized in that** the crystalline urethane acrylate is synthesized by reacting the following components:
I.1) at least one crystalline, hydroxyl-containing polyester having a melting point of 40-130°C
I.2) at least one polyisocyanate,
I.3) at least one compound containing at least one alcohol group and at least one polymerizable acrylate group.

3. A radiation-curable powder coating composition according to claim 2, **characterized in that** the polyester I.1 is synthesized from at least one monomeric dicarboxylic acid selected from dodecanedioic acid, adipic acid, succinic acid, sebacic acid, isophthalic acid, terephthalic acid, hexahydroterephthalic acid, and 1,4-cyclohexanedicarboxylic acid
and
at least one monomeric polyol selected from monoethylene glycol, butanediol, hexanediol, neopentyl glycol, cyclohexanedimethanol, trimethylolpropane, and glycerol.

4. A radiation-curable powder coating composition according to at least one of claims 2 to 3, **characterized in that** isophorone diisocyanate, hexamethylene diisocyanate, trimethylhexamethylene diisocyanate, dicyclohexylmethyl diisocyanate or 2,2,6-trimethyl-1,4-diisocyanatocyclohexane, or norbornane diisocyanate, alone or in a mixture, or a follow-on product of these diisocyanates, such as an isocyanurate, allophanate or biuret, is used as polyisocyanate I.2.

5. A radiation-curable powder coating composition according to at least one of claims 2 to 4, **characterized in that** hydroxyethylacrylate is used as component I.3.

6. A radiation-curable powder coating composition according to at least one of claims 1 to 5, **characterized in that** UV initiators, levelling agents, light stabilizers, devolatilizers, pigments, fillers, adhesion promoters or further acrylate- and/or methacrylate-functional compounds are present as auxiliaries and additives.

7. The use of a composition comprising
I. a binder composed of at least one crystalline urethane acrylate with a melting point of from 40 to 130°C
and
II. auxiliaries and additives, for preparing a radiation-curable powder coating composition.

8. The use according to claim 7, **characterized in that** the crystalline urethane acrylate I is synthesized by reacting the following components:
I.1 at least one crystalline, hydroxyl-containing polyester having a melting point of 40-130°C
I.2 at least one polyisocyanate,
I.3 at least one compound containing at least one alcohol group and at least one polymerizable acrylate group.

9. The use according to claim 8, **characterized in that** the polyester I.1 is synthesized from at least one monomeric dicarboxylic acid selected from dodecanedioic acid, adipic acid, succinic acid, sebacic acid, isophthalic acid, terephthalic acid, hexahydroterephthalic acid, and 1,4-cyclohexanedicarboxylic acid
and
at least one monomeric polyol selected from monoethylene glycol, butanediol, hexanediol, neopentyl glycol, cyclohexanedimethanol, trimethylolpropane, and glycerol.

10. The use according to at least one of claims 8 to 9, **characterized in that** isophorone diisocyanate, hexamethylene diisocyanate, trimethylhexamethylene diisocyanate, dicyclohexylmethyl diisocyanate or 2,2,6-trimethyl-1,4-diisocyanatocyclohexane, or norbornane diisocyanate, alone or in a mixture, or a follow-on product of these diisocyanates, such as an isocyanurate, allophanate or biuret, is used as polyisocyanate I.2.

11. The use according to at least one of claims 8 to 10, **characterized in that** hydroxyethylacrylate is used as component I.3.

12. The use according to at least one of claims 7 to 11, **characterized in that** levelling agents, light stabilizers, devolatilizers, pigments, fillers, adhesion promoters or further acrylate- and/or methacrylate-functional compounds are present as auxiliaries and additives.

13. The use of a radiation-curable powder coating composition according to at least one of claims 7 to 12 for producing a coating.

14. The use of a radiation-curable powder coating composition according to at least one of claims 7 to 13 for producing a light-stable and weather-stable, flexible, hard, and well-adhering coating.

15. A process for preparing a radiation-curable powder coating composition comprising
I. a binder composed of at least one crystalline urethane acrylate with a melting point of from 40 to 130°C
and
II. auxiliaries and additives,
observing an upper temperature limit of between 120°C and 130°C, in heatable kneading apparatus, especially an extruder.

16. A process according to claim 15, **characterized in that** compounds according to at least one of claims 2 to 6 are used as ingredients.

17. A process for producing a coating by using a radiation-curable powder coating composition comprising
I. a binder composed of at least one crystalline urethane acrylate with a melting point of from 40 to 130°C
and
II. auxiliaries and additives.

18. A process according to claim 17, **characterized in that** compounds according to at least one of claims 2 to 6 are used as starting materials.

19. The use of a powder coating composition according to claim 14 for producing a glossy coating.

20. The use of a powder coating composition according to claim 14 for producing a matt coating.

## Revendications

1. Composition de laquage en poudre durcissable par rayons comprenant :
I. un agent liant composé de :
au moins un acrylate d'uréthane cristallin ayant un point de fusion compris entre 40 et 130°C, et
II. des substances auxiliaires et des additifs.

2. Composition de laquage en poudre durcissable par rayonnement selon la revendication 1,
**caractérisée en ce que**
l'acrylate d'uréthane cristallin est constitué par la réaction des composants suivants :
I.1) au moins un polyester comprenant des groupes hydroxyle cristallins et ayant un point de fusion compris entre 40 et 130°C,
I.2) au moins un polyisocyanate,
I.3) au moins un composé comprenant au moins un groupe d'alcools et au moins un groupe d'acrylates capables de polymériser.

3. Composition de laquage en poudre durcissable par rayonnement selon la revendication 2,
**caractérisée en ce que**
le polyester I.1 est constitué d'au moins un acide dicarbonique monomère, choisi parmi l'acide dodécanedioïque, l'acide adipique, l'acide succinique, l'acide sébacique, l'acide isophtalique, l'acide téréphtalique, l'acide hexahydrotéréphtalique et l'acide 1,4-cyclohexanedicarbonique, et
d'au moins un polyol monomère, choisi parmi le monoéthylène-glycol, le butanediol, l'hexanediol, le néopentyl-glycol, le cyclohexanediméthanol, le triméthylolpropane et la glycérine.

4. Composition de laquage en poudre durcissable par rayonnement selon au moins l'une des revendications 2 à 3,
**caractérisée en ce que**
comme polyisocyanate I.2, on utilise le diisocyanate d'isophorone, le diisocyanate d'hexaméthylène, le diisocyanate de triméthylhexaméthylène, le diisocyanate de dicyclohexylméthyl ou le 2,2,6-triméthyl-1,4-diisocyanatocyclohexane, le diisocyanate norbornène seul ou en mélanges ou les produits issus de ces diisocyanates, comme les isocyanurates, les allophanates ou les biurets.

5. Composition de laquage en poudre durcissable par rayonnement selon au moins l'une des revendications 2 à 4,
**caractérisée en ce que**
l'hydroxyéthylacrylate est utilisé comme composant I.3.

6. Composition de laquage en poudre durcissable par rayonnement selon au moins l'une des revendications 1 à 5,
**caractérisée en ce que**
comme substances auxiliaires ou additifs, elle contient des amorceurs UV, des produits nivelants, des stabilisateurs de lumière, des agents de dégazage, des pigments, des charges, des agents de pontage ou d'autres composés contenant des acrylates et/ou des méthacrylates.

7. Utilisation de compositions comprenant :
I. un agent liant composé de :
au moins un acrylate d'uréthane cristallin ayant un point de fusion compris entre 40 et 130°C, et
II. des substances auxiliaires et des additifs
pour la fabrication de compositions de laquage en poudre durcissable par rayonnement.

8. Utilisation selon la revendication 7,
**caractérisée en ce que**
l'acrylate d'uréthane cristallin 1 est constitué par la réaction des composants suivants :
I.1) au moins un polyester comprenant des groupes hydroxyle et ayant un point de fusion compris entre 40 et 130°C,
I.2) au moins un polyisocyanate,
I.3) au moins un composé comprenant un minimum d'un groupe d'alcools et au moins un groupe d'acrylates capables de polymériser.

9. Utilisation selon la revendication 8,
**caractérisée en ce que**
le polyester I.1 est constitué d'au moins un acide dicarbonique monomère, choisi parmi l'acide dodécanedioïque, l'acide adipique, l'acide succinique, l'acide sébacique, l'acide isophtalique, l'acide téréphtalique, l'acide hexahydrotéréphtalique et l'acide 1,4-cyclohexanedicarbonique, et
d'au moins un polyol monomère, choisi parmi le monoéthylène-glycol, le butanediol, l'hexanediol, le néopentyl-glycol, le cyclohexanediméthanol, le triméthylolpropane et la glycérine.

10. Utilisation selon au moins l'une des revendications 8 à 9,
**caractérisée en ce que**
comme polyisocyanate I.2, on utilise le diisocyanate d'isophorone, le diisocyanate d'hexaméthylène, le diisocyanate de triméthylhexaméthylène, le diisocyanate de dicyclohexylméthyl ou le 2,2,6-triméthyl-1,4-diisocyanatocyclohexane, le diisocyanate norbornène seul ou en mélanges ou les produits issus de ces diisocyanates, comme les isocyanurates, les allophanates ou les biurets.

11. Utilisation selon au moins l'une des revendications 8 à 10,
**caractérisée en ce que**
l'hydroxyéthylacrylate est utilisé comme composant I.3.

12. Utilisation selon au moins l'une des revendications 7 à 11,
**caractérisée en ce que**
comme substances auxiliaires ou additifs, elle comprend des produits nivelants, des stabilisateurs de lumière, des agents de dégazage, des pigments, des charges, des agents de pontage ou d'autres composés contenant des acrylates et/ou des méthacrylates.

13. Utilisation de compositions de laquage en poudre durcissable par rayonnement selon au moins l'une des revendications 7 à 12, pour la fabrication de revêtements.

14. Utilisation de compositions de laquage en poudre durcissable par rayonnement selon au moins l'une des revendications 7 à 13, pour la fabrication de revêtements résistants à la lumière et aux intempéries, flexibles, durs et offrant une bonne adhésion.

15. Procédé de fabrication de compositions de laquage en poudre durcissable par rayonnement et comprenant :
I. un agent liant composé de :
au moins un acrylate d'uréthane cristallin ayant un point de fusion compris entre 40 et 130°C, et
II. des substances auxiliaires et des additifs,
en respectant le seuil limite supérieur de température compris entre 120°C et 130°C dans des pétrins mécaniques pouvant être chauffés, notamment des extrudeuses.

16. Procédé selon la revendication 15,
**caractérisé en ce que**
comme matières d'emploi on utilise des compositions selon au moins l'une des revendications 2 à 6.

17. Procédé de fabrication de revêtements par l'utilisation de compositions de laquage en poudre durcissable par rayonnement comprenant :
I. un agent liant composé de :
au moins un acrylate d'uréthane cristallin ayant un point de fusion compris entre 40 et 130°C, et
II. des substances auxiliaires et des additifs.

18. Procédé selon la revendication 17,
**caractérisé en ce que**
comme composants de base on utilise des compositions selon au moins l'une des revendications 2 à 6.

19. Utilisation de compositions de laquage en poudre durcissable par rayonnement selon la revendication 14, pour la fabrication de revêtements brillants.

20. Utilisation de compositions de laquage en poudre durcissable par rayonnement selon la revendication 14, pour la fabrication de revêtements mats.
